# EUROPÄISCHE PATENTSCHRIFT

(11) **EP 1 911 305 B1**
(45) Veröffentlichungstag und Bekanntmachung des Hinweises auf die Patenterteilung: **19.01.2011**
(21) Anmeldenummer: 06763823.9
(22) Anmeldetag: 21.06.2006
(51) Int. Cl.: H04W 88/08

(54) **ÜBERTRAGUNG VON ETHERNET-PAKETEN ÜBER EINE CPRI-SCHNITTSTELLE**
TRANSFER OF ETHERNET PACKETS VIA A CPRI-INTERFACE
TRANSMISSION DE PAQUETS ETHERNET AU MOYEN D'UNE INTERFACE CPRI

(30) Priorität: 13.07.2005 EP 05015256
(43) Veröffentlichungstag der Anmeldung: 16.04.2008
(73) Patentinhaber: Nokia Siemens Networks GmbH & Co. KG, 81541 München (DE)
(72) Erfinder: KROENER, Hans, 73312 Geislingen-Weiler (DE)
(86) Internationale Anmeldenummer: PCT/EP2006/063424
(87) Internationale Veröffentlichungsnummer: WO 2007/006629

(56) Entgegenhaltungen:
- WO-A-2005/048625
- "CPRI Specification V2.0 (2004-10-01)" COMMON PUBLIC RADIO INTERFACE (CPRI); INTERFACE SPECIFICATION, [Online] 1. Oktober 2004 (2004-10-01), Seiten 1-75, XP002359217 Gefunden im Internet: URL:http://www.cpri.online/> [gefunden am 2005-12-14] in der Anmeldung erwähnt

## Beschreibung

Die Erfindung betrifft ein Verfahren zum Betreiben einer Basisstation, bei dem die Basisstation eine CPRI-Schnittstelle zwischen einer ersten Einheit und einer zweiten Einheit umfasst. Weiterhin betrifft die Erfindung eine Basisstation zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

In Basisstationen von Funkkommunikationssystemen existieren verschiedene Einheiten, welche durch geeignete Schnittstellen miteinander verbunden sind. Basisstationen umfassen in der Regel Einheiten zur Basisbandverarbeitung, wobei in den Einrichtungen zur Basisbandverarbeitung Daten für bzw. von Teilnehmerstationen verarbeitet werden. Weiterhin existieren Sende- und Empfangseinheiten, welche von der Basisbandverarbeitung gelieferte Basisbanddaten auf Trägerfrequenzen aufmodulieren und an Teilnehmerstationen senden bzw. von Teilnehmerstationen auf den Trägerfrequenzen empfangene Daten in das Basisband umsetzen und an die Basisbandverarbeitung weitergeben. Die Verbindung zwischen einer Einheit zur Basisbandverarbeitung und einer Sende- und Empfangseinheit kann z.B. erfolgen über eine Schnittstelle gemäß dem CPRI Standard (aktuell: CPRI Specification V2.0 (2004-10-01), Common Public Radio Interface (CPRI); Interface Specification, erhältlich über http://www.cpri.info/).

Der Erfindung liegt die Aufgabe zugrunde, ein effizientes Verfahren zum Betreiben einer Basisstation und eine ebensolche Basisstation aufzuzeigen, bei welchen eine CPRI-Schnittstelle eingesetzt wird.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben einer Basisstation werden Daten zwischen einer ersten Einheit und einer zweiten Einheit der Basisstation über eine CPRI-Schnittstelle übertragen. Erfindungsgemäß werden CPRI-Daten als Ethernet-Pakete übertragen.

Es existiert eine CPRI-Schnittstelle zwischen den beiden Einheiten der Basisstation. Somit weisen die beiden Einheiten in ihrem Protokollstapel Schichten auf, welche Daten gemäß dem CPRI-Standard verarbeiten. Diese CPRI-Daten werden gemäß der Erfindung paketiert und paketweise übertragen, wobei für die paketweise Übertragung der Ethernet-Standard verwendet wird. Somit werden zwischen der ersten und der zweiten Einheit nicht kontinuierlich Informationsbits übertragen, sondern paketweise, wobei zwischen den einzelnen Paketen Übertragungspausen existieren können. Dass Ethernet-Pakete CPRI-Daten beinhalten, bedeutet, dass sowohl die erste als auch die zweite Einheit bei der Verarbeitung der CPRI-Daten vollständig gemäß dem Ethernet-Protokoll, d.h. gemäß dem Standard IEEE 802.3, vorgehen. Insbesondere werden nicht lediglich Teile dieses Standards verwendet.

Es ist vorgesehen, dass in Bezug auf die in den CPRI-Daten enthaltenen Antennensignale ausschließlich empfangene oder zu versendende Antennensignale übertragen werden. Bei empfangenen Antennensignalen handelt es sich um Signale, welche von einer Antenne der Basisstation empfangen wurden und im Anschluss zwischen der ersten und der zweiten Einheit der Basisstation zu übertragen sind. Bei zu versendenden Antennensignalen handelt es sich um Signale, welche zwischen der ersten und der zweiten Einheit der Basisstation übertragen werden und im Anschluss von einer Antenne der Basisstation abzustrahlen sind. Es werden gemäß der betrachteten Weiterbildung lediglich verwendete Antennensignale über die CPRI-Schnittstelle übertragen. Füllbits für aktuell nicht verwendete Antennensignale werden nicht übertragen. Dies führt zu einer Reduktion der Datenrate im Vergleich zu dem Fall, dass eine bestimmte Anzahl von Antennensignalen über die CPRI-Schnittstelle übertragen wird, wovon jedoch lediglich ein Teil abzustrahlende oder empfangene Informationen beinhaltet.

In Weiterbildung der Erfindung wird von der ersten Einheit und der zweiten Einheit bei der Verarbeitung der CPRI-Daten auf der untersten Protokollschicht das Ethernet-Protokoll verwendet. Bei den Protokollschichten handelt es sich hierbei um die Protokollschichten des ISO/OSI Schichtmodells. Auf über der Ethernet-Schicht liegenden Schichten verarbeiten die erste Einheit und die zweite Einheit die Daten gemäß den CPRI-Vorgaben.

Einer vorteilhaften Ausgestaltung der Erfindung gemäß entspricht eine den CPRI-Daten senderseitig hinzugefügte Leitungskodierung ausschließlich der Leitungskodierung gemäß dem Ethernet-Protokoll. Bei dem Sender kann es sich hierbei um die erste oder die zweite Einheit handeln. Es werden hierbei den CPRI-Daten keine weiteren Leitungskodierungsbits hinzugefügt als diejenigen, welche standardgemäß bei der Übertragung von Ethernet-Paketen verwendet werden.

Einer anderen Ausgestaltung der Erfindung gemäß enthalten die CPRI-Daten ausschließlich herstellerunabhängige Informationen. Durch diese Ausgestaltung wird die Übertragung von herstellerabhängigen Informationen bei der Übertragung von CPRI-Daten als Ethernet-Pakete ausgeschlossen.

Vorteilhaft ist es, wenn die CPRI-Daten keine für zukünftige Erweiterungen reservierten Bits enthalten. Derartige Bits erhöhen die Datenrate und daher kann zur Reduzierung der Datenrate auf sie verzichtet werden. Die Ethernet-Pakete enthalten somit ausschließlich aktuell zur Informationsvermittlung verwendete Bits.

Einer vorteilhaften Ausgestaltung der Erfindung gemäß werden die CPRI-Daten zwischen der ersten Einheit und einer Mehrzahl von zweiten Einheiten übertragen, wobei die erste Einheit mit einem Ethernet-Switch verbunden ist, und der Ethernet-Switch sternförmig mit der Mehrzahl von zweiten Einheiten verbunden ist. Hierbei kann die erste Einheit mit einer Ethernet-Leitung mit elektrischem oder optischem Übertragungsverfahren, wie z.B. mit einer GBit oder 100 GBit Ethernet-Leitung, mit dem Ethernet-Switch verbunden sein, und jede der zweiten Einheiten mit einer Ethernet-Leitung mit elektrischem Übertragungsverfahren, wie z.B. mit einer MBit oder 100 MBit Ethernet-Leitung, mit dem Ethernet-Switch verbunden sein. Diese Konstellation eignet sich insbesondere für Anwendungen in Gebäuden, in welchen bereits MBit-Ethernet-Leitungen gelegt sind, welche von der Basisstation verwendet werden können. Weiterhin kann die erste Einheit mit einer Ethernet-Leitung mit optischem Übertragungsverfahren, wie z.B. mit einer GBit oder 100 GBit Ethernet-Leitung, mit dem Ethernet-Switch verbunden sein, und jede der zweiten Einheiten mit einer Ethernet-Leitung mit elektrischem Übertragungsverfahren, wie z.B. mit einer GBit oder 100 GBit Ethernet-Leitung, mit dem Ethernet-Switch verbunden sein. Diese Konstellation eignet sich aufgrund der Verwendung des optischen Übertragungsverfahrens insbesondere für die Überbrückung großer Distanzen zwischen den beiden Einheiten der Basisstation.

In Ausgestaltung der Erfindung sind die erste Einheit und/oder zumindest eine der zweiten Einheiten über eine Mehrzahl von Ethernet-Leitungen mit dem Ethernet-Switch verbunden, wobei für die Übertragung über die Mehrzahl von Ethernet-Leitungen die Link Aggregation Methode angewandt wird.

Besonders vorteilhaft ist es, wenn die Ethernet-Pakete über eine oder mehrere Ethernet-Leitungen zwischen der ersten und der zweiten Einheit übertragen werden, wobei diese Ethernet-Leitungen auch zur Übertragung anderer Daten verwendet werden. In diesem Fall werden Ethernet-Leitungen nicht ausschließlich für die CPRI-Schnittstelle verwendet, vielmehr können sich CPRI-Daten mit Paketen anderer Anwendungen das Übertragungsmedium teilen. Hierzu ist es vorteilhaft, wenn für die Übertragung der Ethernet-Pakete der CPRI-Schnittstelle die VLAN-Technologie (Virtual Local Area Network) verwendet wird.

Die erfindungsgemäße Basisstation umfasst eine erste und eine zweite Einheit, zwischen welchen Daten über eine CPRI-Schnittstelle übertragen werden. Sie weist Mittel auf zum Übertragen von CPRI-Daten als Ethernet-Pakete.

Im folgenden wird die Erfindung anhand eines Ausführungsbeispiels näher erläutert. Dabei zeigen:
- Figur 1:: ein Basisstationssystem nach dem Stand der Tech- nik,
- Figur 2:: ein erstes Basisstationssystem gemäß der Erfin- dung,
- Figur 3a:: ein zweites Basisstationssystem gemäß der Erfin- dung für Indoor-Anwendungen,
- Figur 3b:: ein drittes Basisstationssystem gemäß der Erfin- dung für Metro-Anwendungen.

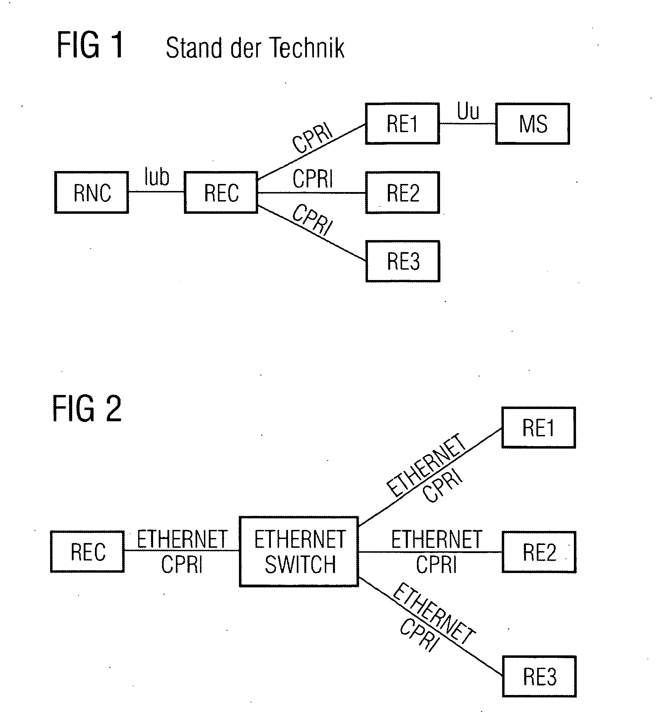

Das in Figur 1 dargestellte Basisstationssystem umfasst die Basisbandverarbeitungseinrichtung REC (Radio Equipment Controller), welche über die in UMTS mit Iub bezeichnete Schnittstelle mit einer Funknetzkontrolleinrichtung RNC (Radio Network Controller) verbunden ist. Die Basisbandverarbeitungseinrichtung REC ist mit den Sende- und Empfangseinheiten RE1, RE2 und RE3 (RE: Radio Equipment) jeweils über eine CPRI-Schnittstelle CPRI verbunden. Von den Sende- und Empfangseinheiten RE1, RE2 und RE3 werden Teilnehmerstationsdaten an Teilnehmerstationen ausgestrahlt bzw. von diesen empfangen. In Figur 1 ist beispielhaft die Teilnehmerstation MS dargestellt, welche über die in UMTS mit Uu bezeichnete Funkschnittstelle mit der Sende- und Empfangseinheit RE1 verbunden ist. Jede Sende- und Empfangseinheit RE1, RE2 und RE3 ist für die Ausstrahlung von Funksignalen auf einer Funkfrequenz bzw. in einem Frequenzband und/oder in einen Sektor zuständig.

Die CPRI Schnittstelle wird beschrieben in der derzeit gültigen Standardversion CPRI Specification V2.0 . Die CPRI Schnittstelle verwendet ein elektrisches und/oder optisches Übertragungsverfahren auf der physikalischen Schicht. Über die CPRI Schnittstelle werden verschiedene Datentypen, nämlich Synchronisationsinformationen, Kontrollinformationen und Nutzdaten, unter Verwendung eines Zeitmultiplexverfahrens übertragen. Der CPRI-Standard definiert die Schichten 1 und 2 des ISO/OSI-Protokollstapels der CPRI-Schnittstelle. Gemäß dem Stand der Technik handelt es sich bei den über die CPRI Schnittstelle übertragenen Informationen um einen kontinuierlichen synchronen Datenstrom, welcher aus den zeitlich gemultiplexten Datentypen besteht.

Gemäß der Erfindung werden die CPRI-Daten, d.h. die über die CPRI-Schnittstelle CPRI zwischen der Basisbandverarbeitungseinrichtung REC und den Sende- und Empfangseinheiten RE1, RE2 und RE3 übertragenen Informationen, als Ethernet-Pakete übertragen. Gemäß Figur 2 ist hierzu die Basisbandverarbeitungseinrichtung REC an einen Ethernet-Switch ETHERNET SWITCH angeschlossen, welcher an die Sende- und Empfangseinheiten RE1, RE2 und RE3 angeschlossen ist. Dies bedeutet, dass für die CPRI-Daten auf der untersten Schicht des ISO/OSI-Protokollstapels das Ethernet-Protokoll ETHERNET zum Einsatz kommt. Im Gegensatz zum Stand der Technik wird kein kontinuierlicher synchroner Datenstrom über die CPRI-Schnittstelle übertragen, sondern Ethernet-Pakete. Über der Ethernet-Schicht liegen gemäß CPRI spezifizierte Schichten zur Verarbeitung der CPRI-Daten.

Gemäß dem derzeitigen CPRI-Standard sind auf der physikalischen Schicht Datenraten von 614.4 MBit/s, 1228.8 MBit/s oder 2457.6 MBit/s möglich. Für die Übertragung über Ethernet-Leitungen sind Datenraten von 10 MBit/s, 100 MBit/s, 1GBit/s oder 10 GBit/s möglich. Daher müsste für die 614.4 MBit/s CPRI-Verbindung eine 1GBit/s Ethernet-Leitung verwendet werden, für die 1228.8 MBit/s CPRI-Verbindung zwei 1GBit/s Ethernet-Leitungen, und für die 2457.6 MBit/s CPRI-Verbindung drei 1GBit/s Ethernet-Leitungen. Um die Anzahl bzw. die Bandbreite der zur Übertragung der CPRI-Daten erforderlichen Ethernet-Leitungen zu reduzieren, und somit die CPRI-Daten effizient als Ethernet-Pakete übertragen zu können, sind die folgenden Modifikationen möglich:
- Entfernung der Leitungskodierung:
   Bei der CPRI Leitungskodierung werden auf der physikalischen Schicht jeweils 8 Bits um 2 Bits Redundanz ergänzt. Verzichtet man auf diese Leitungskodierung, so reduziert dies die CPRI-Datenrate auf 491.520 MBit/s, 983.040 MBit/s oder 1966.080 MBit/s. Durch die Verwendung des Ethernet-Protokolls auf der physikalischen Schicht wird eine Leitungskodierung hinzugefügt, so dass die CPRI-Daten trotz Wegfall der CPRI-Leitungskodierung leitungskodiert übertragen werden.
   Gemäß dem Stand der Technik kann empfängerseitig bei der CPRI-Übertragung anhand der Leitungskodierung erkannt werden, welche Bestandteile der CPRI-Daten an welcher Stelle innerhalb des kontinuierlichen CPRI-Datenstroms zu finden ist. Entfällt die CPRI-Leitungskodierung, sollte eine Zuordnung geschaffen werden zwischen der Struktur der CPRI-Daten und den Ethernet-Paketen, welche die CPRI-Daten beinhalten. Beispielsweise können in die Ethernet-Pakete Informationsfelder eingefügt werden, welche Beginn und Ende von CPRI-Rahmen und CPRI-Hyperrahmen anzeigen.
- Entfernung der herstellerspezifischen Informationen und/oder der für zukünftige Erweiterungen reservierten Bits:
   Die Entfernung der herstellerspezifischen Kontrollinformationen aus den CPRI-Daten resultiert in einer Reduktion der CPRI-Datenrate um bzw. abhängig von der Verwendung des Pointers.
   Die Entfernung der für zukünftige Erweiterungen reservierten Bits aus den CPRI-Daten resultiert in einer Reduktion der CPRI-Datenrate um
- Entfernung unbenutzter Antennensignale:
   Abhängig von der Ausgestaltung der Basisstation wird eine unterschiedliche Anzahl von Antennensignalen benötigt, wobei unter einem Antennensignal das von einer Antenne ausgestrahlte oder empfangene Signal verstanden wird. Gewöhnlicherweise weist eine UMTS-Basisstation sechs Antennen auf, während eine Mikrobasisstation lediglich eine Antenne aufweist. Aufgrund der unterschiedlichen Anzahl verwendeter Antennen ist es möglich, dass bei CPRI Übertragungsressourcen, welche für Antennensignale vorgesehen sind und reserviert werden, nicht genutzt werden. Für unbenutzte Antennensignale werden Nullen zwischen der Basisbandverarbeitungseinrichtung REC und den Sende- und Empfangseinheiten RE1, RE2 und RE3 übertragen. Indem diese ungenutzten Ressourcen aus den CPRI-Daten entfernt werden, wird die für die Übertragung der CPRI-Daten benötigte Bandbreite weiter reduziert.

Unter Verwendung der erläuterten Maßnahmen ist es möglich, eine Verbindung für CPRI-Daten, welche ursprünglich 1228.8 MBit/s benötigt, über eine 1 GBit/s Ethernet-Leitung zu übertragen, eine 2457.6 MBit/s CPRI-Verbindung über zwei 1 GBit/s Ethernet-Leitungen, und eine 614.4 MBit/s CPRI-Verbindung über wenige 100 MBit/s Ethernet-Leitungen.

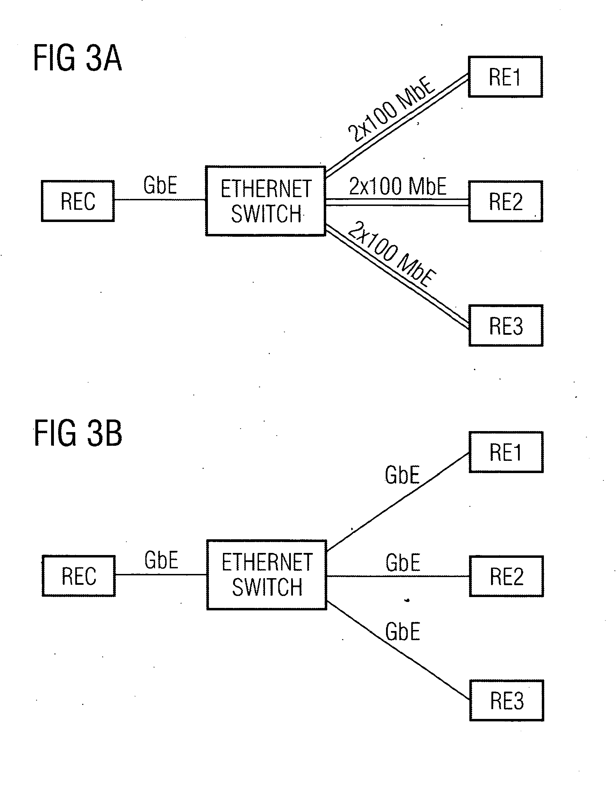

Werden die CPRI-Daten über Ethernet-Pakete übertragen, so können zur Verbindung der Basisbandverarbeitungseinrichtung REC mit den Sende- und Empfangseinheiten RE1, RE2 und RE3 bestehende Ethernet-Leitungen eingesetzt werden. Die Figuren 3a und 3b zeigen Beispiele für die Verwendung bestehender Ethernet-Leitungen für die Verbindung zwischen der Basisbandverarbeitungseinrichtung REC und den Sende- und Empfangseinheiten RE1, RE2 und RE3.

Die Konstellation gemäß Figur 3a eignet sich insbesondere für Indoor-Anwendungen, d.h. für Fälle, bei welchen die Sendeund Empfangseinheiten RE1, RE2 und RE3 sich innerhalb eines Gebäudes befinden. Die Basisbandverarbeitungseinrichtung REC ist über eine Gigabit-Ethernet-Leitung GbE mit dem Ethernet-Switch ETHERNET SWITCH verbunden, während die Sende- und Empfangseinheiten RE1, RE2 und RE3 jeweils über zwei 100 MBit-Ethernet-Leitungen 100 MbE mit dem Ethernet-Switch ETHERNET SWITCH verbunden sind. Es ist selbstverständlich möglich, dass die Sende- und Empfangseinheiten RE1, RE2 und RE3 jeweils über unterschiedliche Anzahlen von Ethernet-Leitungen mit dem Ethernet-Switch ETHERNET SWITCH verbunden werden. Eine Indoor-Basisstation versorgt in der Regel lediglich eine Funkzelle, wobei unter einer Funkzelle ein bestimmter Sektor in Kombination mit einem bestimmten Frequenzband verstanden wird. Daher muss bei einer Indoor-Basisstation von und zu den Sende- und Empfangseinheiten RE1, RE2 und RE3 keine hohen Datenraten übertragen werden, so dass die beiden 100 MBit-Ethernet-Leitungen 100 MbE ausreichend zur Versorgung von jeweils einer Sende- und Empfangseinheit RE1, RE2 oder RE3 sind. Bei 100 MBit-Ethernet-Leitungen wird ein elektrisches Übertragungsverfahren verwendet, die Reichweite dieser Verbindungen beträgt maximal einige 100 Meter. Viele Gebäude weisen eine Verkabelung mit 100 MBit-Ethernet-Leitungen auf, so dass bereits bestehende Leitungen für die Übertragung der CPRI-Daten verwendet werden können.

Die Konstellation gemäß Figur 3b eignet sich insbesondere für Metro-Anwendungen, d.h. für Fälle, bei welchen die Sende- und Empfangseinheiten RE1, RE2 und RE3 innerhalb eines Gebietes, welches etwa die Größe einer Stadt aufweist, verteilt sind. Die Basisbandverarbeitungseinrichtung REC ist über eine Gigabit-Ethernet-Leitung GbE mit dem Ethernet-Switch ETHERNET SWITCH verbunden, und auch die Sende- und Empfangseinheiten RE1, RE2 und RE3 sind jeweils über eine Gigabit-Ethernet-Leitung GbE mit dem Ethernet-Switch ETHERNET SWITCH verbunden. Zur Funkabdeckung eines städtischen Gebietes müssen die Sende- und Empfangseinheiten RE1, RE2 und RE3 im Vergleich zum Indoor-Szenario einen größeren geografischen Bereich abdecken, eine Basisstation versorgt in diesem Fall in der Regel mehrere Funkzellen. Daher wird eine größere Menge an Informationen von den Sende- und Empfangseinheiten RE1, RE2 und RE3 an Teilnehmerstationen abgestrahlt bzw. von diesen empfangen als bei dem Indoor-Szenario, so dass sich die Anbindung der Sende- und Empfangseinheiten RE1, RE2 und RE3 über Gigabit-Ethernet-Leitungen GbE anbietet. Für die Gigabit-Ethernet-Leitungen GbE wird ein optisches Übertragungsverfahren verwendet, so dass die Gigabit-Ethernet-Leitungen sich über einige Kilometer erstrecken können. Anstelle der Gigabit-Ethernet-Leitungen GbE können auch 10 Gigabit-Ethernet-Leitungen zum Einsatz kommen. Die Übertragung von CPRI-Daten über Gigabit-Ethernet-Leitungen ist vorteilhaft, da diese Verbindungen nicht teuer sind und in zunehmendem Maß gelegt werden.

Vorteilhaft ist es, wenn über die Ethernet-Leitungen nicht ausschließlich CPRI-Daten transportiert werden, sondern auch andere Daten. Die Übertragungsressource der Ethernet-Leitungen können somit aufgeteilt werden zwischen der CPRI-Anwendung und anderen Anwendungen. Da die CPRI-Daten in Echtzeit übertragen werden müssen, ist es vorteilhaft, die von Ethernet bekannte VLAN (VLAN: Virtual Local Area Network) Technologie einzusetzen. Hierdurch kann den CPRI-Daten eine höhere Priorität zugeordnet werden als den Daten der anderen Anwendungen. VLAN ist beschrieben z.B. in IEEE: Carrier sense multiple access with collision detection (CSMA/CD) access method and physical layer specification, IEEE Standards IEEE 802.3, 2002, Teil 1, insbesondere S. 42 bis 43, und 802.1Q, IEEE Standards for Local and metropolitan area networks, Virtual Bridged Local Area Networks, 7. Mai 2003.

Werden mehrere parallele Ethernet-Leitungen eingesetzt, wie in Figur 3a beispielsweise zwischen dem Ethernet-Switch ETHERNET SWITCH und den Sende- und Empfangseinheiten RE1, RE2 und RE3, bietet sich die Verwendung der von Ethernet bekannten Link Aggregation Methode an, beschrieben z.B. in IEEE: Carrier sense multiple access with collision detection (CSMA/CD) access method and physical layer specification, IEEE Standards IEEE 802.3, 2002, Teil 2, insbesondere S. 269 ff.

Hierbei werden Daten abwechselnd in die mehreren Leitungen gegeben.

## Patentansprüche

1. Verfahren zum Betreiben einer Basisstation, bei dem die Basisstation eine erste Einheit (REC) und eine zweite Einheit (RE1, RE2, RE3) umfasst,
Daten zwischen der ersten Einheit (REC) und der zweiten Einheit (RE1, RE2, RE3) über eine CPRI-Schnittstelle (CPRI) übertragen werden, wobei es sich bei den Daten um einen kontinuierlichen synchronen Datenstrom gemäß der CPRI-Schnittstelle, im folgenden CPRI-Daten genannt, handelt
**dadurch gekennzeichnet,**
**dass** der Datenstrom paketweise als Ethernet-Pakete übertragen wird, wobei
zu übertragende Antennensignale des kontinuierlichen synchronen Datenstroms ausschließlich empfangene oder zu versendende Antennensignale aufweisen.

2. Verfahren nach Anspruch 1, bei dem
von der ersten Einheit (REC) und der zweiten Einheit (RE1, RE2, RE3) bei der Verarbeitung der CPRI-Daten auf der untersten Protokollschicht das Ethernet-Protokoll verwendet wird.

3. Verfahren nach einem der Ansprüche 1 bis 2, bei dem eine den CPRI-Daten senderseitig hinzugefügte Leitungskodierung ausschließlich der Leitungskodierung gemäß dem Ethernet-Protokoll entspricht.

4. Verfahren nach einem der Ansprüche 1 bis 3, bei dem die CPRI-Daten ausschließlich herstellerunabhängige Informationen enthalten.

5. Verfahren nach einem der Ansprüche 1 bis 4, bei dem die CPRI-Daten keine für zukünftige Erweiterungen reservierte Bits enthalten.

6. Verfahren nach einem der Ansprüche 1 bis 5, bei dem die CPRI-Daten zwischen der ersten Einheit (REC) und einer Mehrzahl von zweiten Einheiten (RE1, RE2, RE3) übertragen werden, wobei die erste Einheit (REC) mit einem Ethernet-Switch (ETHERNET SWITCH) verbunden ist, und der Ethernet-Switch (ETHERNET SWITCH) sternförmig mit der Mehrzahl von zweiten Einheiten (RE1, RE2, RE3) verbunden ist.

7. Verfahren nach Anspruch 6, bei dem
die erste Einheit (REC) mit einer Ethernet-Leitung (GbE) mit elektrischem oder optischem Übertragungsverfahren mit dem Ethernet-Switch (ETHERNET SWITCH) verbunden ist, und jede der zweiten Einheiten (RE1, RE2, RE3) mit einer Ethernet-Leitungen (100 MbE) mit elektrischem Übertragungsverfahren mit dem Ethernet-Switch (ETHERNET SWITCH) verbunden ist.

8. Verfahren nach Anspruch 6, bei dem
die erste Einheit (REC) mit einer Ethernet-Leitung (GbE) mit optischem Übertragungsverfahren mit dem Ethernet-Switch (ETHERNET SWITCH) verbunden ist, und jede der zweiten Einheiten (RE1, RE2, RE3) mit einer Ethernet-Leitung (GbE) mit optischem Übertragungsverfahren mit dem Ethernet-Switch (ETHERNET SWITCH) verbunden ist.

9. Verfahren nach einem der Ansprüche 6 bis 8, bei dem die erste Einheit (REC) und/oder zumindest eine der zweiten Einheiten (RE1, RE2, RE3) über eine Mehrzahl von Ethernet-Leitungen (GbE, 100 MbE) mit dem Ethernet-Switch (ETHERNET SWITCH) verbunden sind, wobei für die Übertragung über die Mehrzahl von Ethernet-Leitungen (GbE, 100 MbE) die Link Aggregation Methode angewandt wird.

10. Verfahren nach einem der Ansprüche 1 bis 9, bei dem
die Ethernet-Pakete über eine oder mehrere Ethernet-Leitungen (GbE, 100 MbE) zwischen der ersten Einheit (REC) und der zweiten Einheit (RE1, RE2, RE3) übertragen werden, wobei diese Ethernet-Leitungen (GbE, 100 MbE) auch zur Übertragung anderer Daten verwendet werden.

11. Verfahren nach Anspruch 10, bei dem
zur Übertragung der Ethernet-Pakete VLAN verwendet wird.

12. Basisstation mit einer ersten Einheit (REC) und einer
zweiten Einheit (RE1, RE2, RE3), zwischen welchen Daten über eine CPRI-Schnittstelle (CPRI) übertragen werden, wobei es sich bei den Daten um einen kontinuierlichen synchronen Datenstrom gemäß der CPRI-Schnittstelle handelt
**gekennzeichnet durch**
Mittel zum paketweisen Übertragen des Datenstroms als Ethernet-Pakete wobei
in dem kontinuierlichen synchronen Datenstrom enthaltene Antennensignale ausschließlich empfangene oder zu versendende Antennensignale aufweisen.

## Claims

1. Method for operating a base station, in which the base station comprises a first unit (REC) and a second unit (RE1, RE2, RE3),
data are transmitted between the first unit (REC) and the second unit (RE1, RE2, RE3) via a CPRI interface (CPRI), the data being a continuous synchronous data stream based on the CPRI interface, subsequently called CPRI data,
**characterized**
**in that** the data stream is transmitted in packets as Ethernet packets, wherein
antenna signals to be transmitted in the continuous synchronous data stream have exclusively received antenna signals or antenna signals which are to be sent.

2. Method according to Claim 1, in which
the first unit (REC) and the second unit (RE1, RE2, RE3) use the Ethernet protocol for processing the CPRI data on the bottommost protocol layer.

3. Method according to one of Claims 1 and 2, in which a line code added to the CPRI data at the transmitter end corresponds exclusively to the line code based on the Ethernet protocol.

4. Method according to one of Claims 1 to 3, in which the CPRI data contain exclusively manufacturer-independent information.

5. Method according to one of Claims 1 to 4, in which the CPRI data contain no bits reserved for future expansions.

6. Method according to one of Claims 1 to 5, in which the CPRI data are transmitted between the first unit (REC) and a plurality of second units (RE1, RE2, RE3), the first unit (REC) being connected to an Ethernet switch (ETHERNET SWITCH) and the Ethernet switch (ETHERNET SWITCH) being connected to the plurality of second units (RE1, RE2, RE3) in a star shape.

7. Method according to Claim 6, in which the first unit (REC) is connected to the Ethernet switch (ETHERNET SWITCH) by means of an Ethernet line (GbE) using an electrical or optical transmission method, and each of the second units (RE1, RE2, RE3) is connected to the Ethernet switch (ETHERNET SWITCH) by means of an Ethernet line (100 MbE) using an electrical transmission method.

8. Method according to Claim 6, in which the first unit (REC) is connected to the Ethernet switch (ETHERNET SWITCH) by means of an Ethernet line (GbE) using an optical transmission method, and each of the second units (RE1, RE2, RE3) is connected to the Ethernet switch (ETHERNET SWITCH) by means of an Ethernet line (GbE) using an optical transmission method.

9. Method according to one of Claims 6 to 8, in which the first unit (REC) and/or at least one of the second units (RE1, RE2, RE3) are connected to the Ethernet switch (ETHERNET SWITCH) by means of a plurality of Ethernet lines (GbE, 100 MbE), with the Link Aggregation method being applied for the transmission via the plurality of Ethernet lines (GbE, 100 MbE).

10. Method according to one of Claims 1 to 9, in which the Ethernet packets are transmitted between the first unit (REC) and the second unit (RE1, RE2, RE3) via one or more Ethernet lines (GbE, 100 MbE), these Ethernet lines (GbE, 100 MbE) also being used for transmitting other data.

11. Method according to Claim 10, in which
the Ethernet packets are transmitted using VLAN.

12. Base station having a first unit (REC) and a second unit (RE1, RE2, RE3) between which data are transmitted via a CPRI interface (CPRI), the data being a continuous synchronous data stream based on the CPRI interface,
**characterized by**
means for transmitting the data stream in packets as Ethernet packets, wherein antenna signals contained in the continuous synchronous data stream have exclusively received antenna signals or antenna signals which are to be sent.

## Revendications

1. Procédé pour faire fonctionner une station de base, dans lequel la station de base comprend une première unité (REC) et une deuxième unité (RE1, RE2, RE3), des données étant transmises entre la première unité (REC) et la deuxième unité (RE1, RE2, RE3) via une interface CPRI (CPRI), les données étant un flux continu de données synchrones conformément à l'interface CPRI, ci-après dénommées données CPRI, **caractérisé en ce que** le flux de données est transmis par paquets sous la forme de paquets Ethernet, des signaux d'antenne à transmettre du flux continu de données synchrones comportant exclusivement des signaux d'antenne reçus ou à émettre.

2. Procédé selon la revendication 1, dans lequel le protocole Ethernet est utilisé par la première unité (REC) et la deuxième unité (RE1, RE2, RE3) dans le traitement des données CPRI sur la couche de protocole la plus basse.

3. Procédé selon l'une des revendications 1 à 2, dans lequel un codage en ligne ajouté aux données CPRI côté émetteur correspond exclusivement au codage en ligne conformément au protocole Ethernet.

4. Procédé selon l'une des revendications 1 à 3, dans lequel les données CPRI contiennent exclusivement des informations indépendantes du fabricant.

5. Procédé selon l'une des revendications 1 à 4, dans lequel les données CPRI ne contiennent pas de bits réservés pour des élargissements futurs.

6. Procédé selon l'une des revendications 1 à 5, dans lequel les données CPRI sont transmises entre la première unité (REC) et une pluralité de deuxièmes unités (RE1, RE2, RE3), la première unité (REC) étant reliée à un switch Ethernet (ETHERNET SWITCH) et le switch Ethernet (ETHERNET SWITCH) étant relié en étoile à la pluralité de deuxièmes unités (RE1, RE2, RE3).

7. Procédé selon la revendication 6, dans lequel la première unité (REC) est reliée au switch Ethernet (ETHERNET SWITCH) avec une ligne Ethernet (GbE) avec un procédé de transmission électrique ou optique et chacune des deuxièmes unités (RE1, RE2, RE3) est reliée au switch Ethernet (ETHERNET SWITCH) avec une ligne Ethernet (100 MbE) avec un procédé de transmission électrique.

8. Procédé selon la revendication 6, dans lequel la première unité (REC) est reliée au switch Ethernet (ETHERNET SWITCH) avec une ligne Ethernet (GbE) avec un procédé de transmission optique et chacune des deuxièmes unités (RE1, RE2, RE3) est reliée au switch Ethernet (ETHERNET SWITCH) avec une ligne Ethernet (GbE) avec un procédé de transmission optique.

9. Procédé selon l'une des revendications 6 à 8, dans lequel la première unité (REC) et/ou au moins l'une des deuxièmes unités (RE1, RE2, RE3) sont reliées au switch Ethernet (ETHERNET SWITCH) via une pluralité de lignes Ethernet (GbE, 100 MbE), la méthode de l'agrégation de liens étant appliquée pour la transmission via la pluralité de lignes Ethernet (GbE, 100 MbE).

10. Procédé selon l'une des revendications 1 à 9, dans lequel les paquets Ethernet sont transmis via une ou plusieurs lignes Ethernet (GbE, 100 MbE) entre la première unité (REC) et la deuxième unité (RE1, RE2, RE3), ces lignes Ethernet (GbE, 100 MbE) étant également utilisées pour la transmission d'autres données.

11. Procédé selon la revendication 10, dans lequel est utilisé, pour la transmission, le VLAN par paquets Ethernet.

12. Station de base avec une première unité (REC) et une deuxième unité (RE1, RE2, RE3) entre lesquelles des données sont transmises via une interface CPRI (CPRI), les données étant un flux continu de données synchrones conformément à l'interface CPRI, **caractérisée par** des moyens pour transmettre le flux de données par paquets sous la forme de paquets Ethernet, des signaux d'antenne contenus dans le flux continu de données synchrones comportant exclusivement des signaux d'antenne reçus ou à émettre.
